# EUROPEAN PATENT APPLICATION

(11) **EP 4 683 290 A1**
(43) Date of publication of application: **21.01.2026**
(21) Application number: 23962622.9
(22) Date of filing: 27.12.2023
(51) Int. Cl.: H04L 45/02

(54) **LINK FAULT HANDLING METHOD AND APPARATUS, AND ELECTRONIC DEVICE AND MEDIUM**

(71) Applicant: New H3C Technologies Co., Ltd., Hangzhou, Zhejiang 310052 (CN)
(72) Inventor: LIN, Changwang, Beijing 100102 (CN)
(74) Representative: Zimmermann & Partner Patentanwälte mbB
(86) International application number: PCT/CN2023/142380
(87) International publication number: WO 2025/137935

(57) **Abstract**

The embodiments of the present application relate to the field of communications. Provided are a link fault handling method and apparatus, and an electronic device and a medium. The technical solution in the embodiments of the present application comprises: a forwarding chip of a first network device receiving a first message sent by a second network device, wherein the first message comprises a device identifier of a third network device and state information; if the state information indicates that the third network device is unreachable from the second network device, the forwarding chip of the first network device looking up a first forwarding entry where the egress interface is a first interface and the device identifier is the device identifier of the third network device; and setting the state of the first forwarding entry to be an invalid state. Therefore, when a fault occurs in a link between network devices, route switching can be carried out in a more timely manner.

## Description

### Technical field

The present disclosure relates to the technical field of communication, in particular to a method and an apparatus for processing link fault, an electronic device and a medium.

### Background

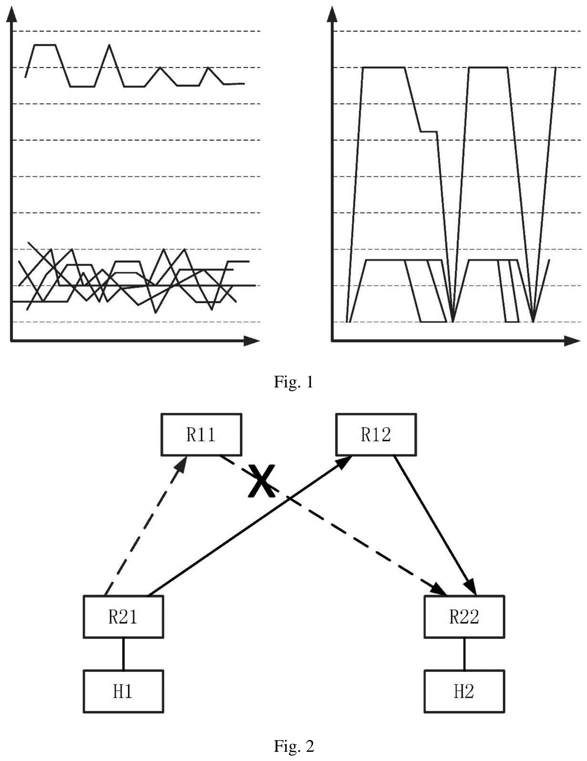

When training large-scale neural network models, it is necessary to use multiple Graphics Processing Units (GPUs) of multiple hosts, and the GPUs need to interact frequently with each other during the training process. For example, the left graph of Fig. 1 is a graph of communication traffics among GPUs during training of a traditional Data Center (DC) traffic model, and the right graph of Fig. 1 is a graph of communication traffics among GPUs during the training of a large-scale Artificial Intelligence (AI) traffic model, where in both traffic graphs in Fig. 1, the horizontal axis represents time, and the vertical axis represents bandwidth. It can be seen that training of the traditional DC traffic model involves a large number of flows and a short total training time, that is, there are many communication links between GPUs, and a communication time of each communication link is short, so the communication quality of the communication links has little influence on the convergence of the DC traffic model. In contrast, training of the AI traffic model involves a small number of flows, but it has characteristics of high network utilization and high bandwidth, and the total training time is long, for example, the training time is usually 10~90 days. During the training process, the network needs to maintain high-performance status continuously. If one communication link fails during the training process, the time required for a round of training process is prolonged, which may even lead to errors in the training process, resulting in the need to restart the training process. Therefore, during the process of training AI traffic model, the quality of the network has an important impact on the training efficiency.

During the training process, the various hosts communicate with each other based on network devices such as switches or routers. Currently, in the case of a link fault between network devices, a network device senses the link fault, and then further needs to notify the other network devices of the fault through route update. After the network devices receive the route update message, the control plane of the network devices then recalculates routes and modifies forwarding table entries in a forwarding chip to avoid continuing to communicate over the failed link. However, a long time is required for fault notification as well as recalculation of routes in the above process, which will lead to untimely fault convergence, thus affecting the training efficiency of the AI traffic model.

### Summary

Examples of the present disclosure aim to provide a method and an apparatus for processing link fault, an electronic device and a medium, to enable more timely route switching in the event of a link fault between network devices. The specific technical solutions are as follows.

In a first aspect, an example of the present disclosure provides a method for processing link fault, which is applied to a forwarding chip of a first network device, wherein the first network device includes a first interface and is connected with a second network device through the first interface, and the second network device is connected with a third network device, and the first network device includes multiple forwarding table entries, wherein the forwarding table entries each include a destination address, an outgoing interface and a device ID, and the device ID is an ID of a network device accessed by a host to which the destination address belongs; the method includes:
receiving a first packet sent by the second network device, wherein the first packet includes a device ID of the third network device and status information, and the status information is used to indicate whether the second network device and the third network device are accessible from each other;
if the status information indicates that the second network device and the third network device are not accessible from each other, searching for a first forwarding table entry with the outgoing interface being the first interface and the device ID being the device ID of the third network device; and
setting a status of the first forwarding table entry to an invalid status.

Optionally, before receiving the first packet sent by the second network device, the method further includes:
receiving, through the first interface, a route update packet forwarded by the second network device, wherein the route update packet includes a first IP address of a host connected to the third network device and the device ID of the third network device;
generating the first forwarding table entry based on the first interface, the first IP address and the device ID of the third network device.

Optionally, the second network device includes a second interface and is connected with the first network device through the second interface; and wherein before receiving the first packet sent by the second network device, the method further includes:
sending a second packet to the second network device, wherein the second packet includes a device ID of the first network device, so that the second network device records a first correspondence between the second interface and the device ID of the first network device; and
receiving a third packet sent by the second network device, and recording a second correspondence between the first interface and a device ID of the second network device, wherein the third packet includes the device ID of the second network device.

Optionally, setting the status of the first forwarding table entry to the invalid status includes:
modifying a status flag bit of the first forwarding table entry to a first value, wherein the first value is used to indicate the invalid status.

Optionally, after receiving the first packet sent by the second network device, the method further includes:
if the status information indicates that the second network device and the third network device are accessible from each other, searching for the first forwarding table entry with the outgoing interface being the first interface and the device ID being the device ID of the third network device; and
setting the status of the first forwarding table entry to a valid status.

Optionally, the first packet is a first link layer broadcast packet, and a payload of the first link layer broadcast packet includes a device ID of the second network device, the device ID of the third network device and the status information; or,
the first packet is a first IP multicast packet, and a payload of the first IP multicast packet includes the device ID of the second network device, the device ID of the third network device and the status information.

Optionally, the second packet is a second link layer broadcast packet, and a payload of the second link layer broadcast packet includes the device ID of the first network device; or, the second packet is a second IP multicast packet, and a payload of the second IP multicast packet includes the device ID of the first network device;
the third packet is a third link layer broadcast packet, and a payload of the third link layer broadcast packet includes the device ID of the second network device; or, the third packet is a third IP multicast packet, and a payload of the third IP multicast packet includes the device ID of the second network device.

Optionally, the route update packet includes an extended community attribute, and the extended community attribute includes the device ID of the third network device.

In a second aspect, an example of the present disclosure provides a method for processing link fault, which is applied to a forwarding chip of a second network device, wherein the second network device is connected with a third network device, and is connected with a first interface of a first network device, and the first network device includes multiple forwarding table entries, wherein the forwarding table entries each include a destination address, an outgoing interface and a device ID, and the device ID is an ID of a network device accessed by a host to which the destination address belongs; the method includes:
acquiring status information, wherein the status information is used to indicate whether the second network device and the third network device are accessible from each other; and
sending a first packet to the first network device, wherein the first packet includes a device ID of the third network device and the status information, so that when the status information indicates that the second network device and the third network device are not accessible from each other, the first network device searches for a first forwarding table entry with the outgoing interface being the first interface and the device ID being the device ID of the third network device, and sets a status of the first forwarding table entry to an invalid status.

Optionally, before acquiring the status information, the method further includes:
receiving a route update packet sent by the third network device, wherein the route update packet includes a first IP address of a host connected to the third network device and the device ID of the third network device; and
forwarding the route update packet to the first network device, so that the first network device generates the first forwarding table entry based on the first interface, the first IP address and the device ID of the third network device.

Optionally, the second network device includes a third interface and is connected with the third network device through the third interface, and the third network device includes a fourth interface and is connected with the second network device through the fourth interface; and wherein before acquiring the status information, the method further includes:
sending a fourth packet to the third network device, wherein the fourth packet includes a device ID of the second network device, so that the third network device records a third correspondence between the fourth interface and the device ID of the second network device; and
receiving a fifth packet sent by the third network device, and recording a fourth correspondence between the third interface and the device ID of the third network device, wherein the fifth packet includes the device ID of the third network device.

Optionally, before sending the first packet to the first network device, the method further includes:
acquiring the device ID of the third network device corresponding to the third interface from the fourth correspondence.

Optionally, there are multiple links between the second network device and the third network device; acquiring the status information includes:
if the multiple links all fail, determining that the status information indicates that the second network device and the third network device are not accessible from each other; or, if any one of the multiple links does not fail, determining that the status information indicates that the second network device and the third network device are accessible from each other.

Optionally, the first packet is a first link layer broadcast packet, and a payload of the first link layer broadcast packet includes a device ID of the second network device, the device ID of the third network device and the status information; or,
the first packet is a first IP multicast packet, and a payload of the first IP multicast packet includes the device ID of the second network device, the device ID of the third network device and the status information.

Optionally, the fourth packet is a fourth link layer broadcast packet, and a payload of the fourth link layer broadcast packet includes the device ID of the second network device; or, the fourth packet is a fourth IP multicast packet, and a payload of the fourth IP multicast packet includes the device ID of the second network device;
the fifth packet is a fifth link layer broadcast packet, and a payload of the fifth link layer broadcast packet includes the device ID of the third network device; or, the fifth packet is a fifth IP multicast packet, and a payload of the fifth IP multicast packet includes the device ID of the third network device.

Optionally, the route update packet includes an extended community attribute, and the extended community attribute includes the device ID of the third network device.

In the third aspect, an example of the present disclosure provides an apparatus for processing link fault, which is applied to a forwarding chip of a first network device, wherein the first network device includes a first interface and is connected with a second network device through the first interface, and the second network device is connected with a third network device, and the first network device includes multiple forwarding table entries, wherein the forwarding table entries each include a destination address, an outgoing interface and a device ID, and the device ID is an ID of a network device accessed by a host to which the destination address belongs; the apparatus includes:
a receiving module, to receive a first packet sent by the second network device, wherein the first packet includes a device ID of the third network device and status information, and the status information is used to indicate whether the second network device and the third network device are accessible from each other ;
a searching module, to search for, if the status information indicates that the second network device and the third network device are not accessible from each other, a first forwarding table entry with the outgoing interface being the first interface and the device ID being an device ID of the third network device; and
a setting module, to set a status of the first forwarding table entry to an invalid status.

Optionally, wherein:
the receiving module is further to receive, through the first interface, a route update packet forwarded by the second network device before receiving the first packet sent by the second network device, wherein the route update packet includes a first IP address of a host connected to the third network device and the device ID of the third network device;
wherein the apparatus further includes a generating module, to generate the first forwarding table entry based on the first interface, the first IP address and the device ID of the third network device.

Optionally, the second network device includes a second interface and is connected with the first network device through the second interface; and wherein the apparatus further includes:
a sending module, to send a second packet to the second network device before the first packet sent by the second network device is received, wherein the second packet includes a device ID of the first network device, so that the second network device records a first correspondence between the second interface and the device ID of the first network device;
wherein the receiving module is further to receive a third packet sent by the second network device, wherein the third packet includes a device ID of the second network device, and a second correspondence between the first interface and the device ID of the second network device is recorded.

Optionally, the setting module is specifically to:
modify a status flag bit of the first forwarding table entry to a first value, wherein the first value is used to indicate the invalid status.

Optionally, the searching module is further to search for, if the status information indicates that the second network device and the third network device are accessible from each other, the first forwarding table entry with the outgoing interface being the first interface and the device ID being the device ID of the third network device, after the first packet sent by the second network device is received;
the setting module is further to set the status of the first forwarding table entry to a valid status.

Optionally, the first packet is a first link layer broadcast packet, and a payload of the first link layer broadcast packet includes a device ID of the second network device, the device ID of the third network device and the status information; or,
the first packet is a first IP multicast packet, and a payload of the first IP multicast packet includes the device ID of the second network device, the device ID of the third network device and the status information.

Optionally, the second packet is a second link layer broadcast packet, and a payload of the second link layer broadcast packet includes the device ID of the first network device; or, the second packet is a second IP multicast packet, and a payload of the second IP multicast packet includes the device ID of the first network device;
the third packet is a third link layer broadcast packet, and a payload of the third link layer broadcast packet includes the device ID of the second network device; or, the third packet is a third IP multicast packet, and a payload of the third IP multicast packet includes the device ID of the second network device.

Optionally, the route update packet includes an extended community attribute, and the extended community attribute includes the device ID of the third network device.

In the fourth aspect, an example of the present disclosure provides an apparatus for processing link fault, which is applied to a forwarding chip of a second network device, wherein the second network device is connected with a third network device, and is connected with a first interface of a first network device, and the first network device includes multiple forwarding table entries, wherein the forwarding table entries each include a destination address, an outgoing interface and a device ID, and the device ID is an ID of a network device accessed by a host to which the destination address belongs; the apparatus includes:
an acquiring module, to acquire status information, wherein the status information is used to indicate whether the second network device and the third network device are accessible from each other; and
a sending module, to send a first packet to the first network device, wherein the first packet includes a device ID of the third network device and the status information, so that when the status information indicates that the second network device and the third network device are not accessible from each other, the first network device searches for a first forwarding table entry with the outgoing interface being the first interface and the device ID being the device ID of the third network device, and sets a status of the first forwarding table entry to an invalid status.

Optionally, the apparatus further includes:
a receiving module, to receive a route update packet sent by the third network device before the status information is acquired, wherein the route update packet includes a first IP address of a host connected to the third network device and the device ID of the third network device;
wherein the sending module is further to forward the route update packet to the first network device, so that the first network device generates the first forwarding table entry based on the first interface, the first IP address and the device ID of the third network device.

Optionally, the second network device includes a third interface and is connected with the third network device through the third interface, and the third network device includes a fourth interface and is connected with the second network device through the fourth interface; wherein:
the sending module is further to send a fourth packet to the third network device before the status information is acquired, wherein the fourth packet includes a device ID of the second network device, so that the third network device records a third correspondence between the fourth interface and the device ID of the second network device;
wherein the apparatus further includes a receiving module, to receive a fifth packet sent by the third network device, wherein the fifth packet includes the device ID of the third network device, and a fourth correspondence between the third interface and the device ID of the third network device is recorded.

Optionally, the acquiring module is further to acquire the device ID of the third network device corresponding to the third interface from the fourth correspondence, before the first packet is sent to the first network device.

Optionally, there are multiple links between the second network device and the third network device; the acquiring module is specifically to:
if the multiple links all fail, determine that the status information indicates that the second network device and the third network device are not accessible from each other; or, if any one of the multiple links does not fail, determine that the status information indicates that the second network device and the third network device are accessible from each other.

Optionally, the first packet is a first link layer broadcast packet, and a payload of the first link layer broadcast packet includes a device ID of the second network device, the device ID of the third network device and the status information; or,
the first packet is a first IP multicast packet, and a payload of the first IP multicast packet includes the device ID of the second network device, the device ID of the third network device and the status information.

Optionally, the fourth packet is a fourth link layer broadcast packet, and a payload of the fourth link layer broadcast packet includes the device ID of the second network device; or, the fourth packet is a fourth IP multicast packet, and a payload of the fourth IP multicast packet includes the device ID of the second network device;
the fifth packet is a fifth link layer broadcast packet, and a payload of the fifth link layer broadcast packet includes the device ID of the third network device; or, the fifth packet is a fifth IP multicast packet, and a payload of the fifth IP multicast packet includes the device ID of the third network device.

Optionally, the route update packet includes an extended community attribute, and the extended community attribute includes the device ID of the third network device.

In a fifth aspect, an example of the present disclosure provides a first network device, wherein the first network device includes a first interface and is connected with a second network device through the first interface, and the second network device is connected with a third network device, and the first network device includes multiple forwarding table entries, wherein the forwarding table entries each include a destination address, an outgoing interface and a device ID, and the device ID is an ID of a network device accessed by a host to which the destination address belongs; the first network device includes: a processor; a transceiver; and a machine-readable storage medium having stored therein machine-executable instructions that can be executed by the processor; wherein the machine-executable instructions cause the processor to:
receive a first packet sent by the second network device, wherein the first packet includes a device ID of the third network device and status information, and the status information is used to indicate whether the second network device and the third network device are accessible from each other ;
if the status information indicates that the second network device and the third network device are not accessible from each other, search for a first forwarding table entry with the outgoing interface being the first interface and the device ID being an device ID of the third network device;
set a status of the first forwarding table entry to an invalid status.

Optionally, the machine-executable instructions further cause the processor to:
before receiving the first packet sent by the second network device, receive, through the first interface, a route update packet forwarded by the second network device, wherein the route update packet includes a first IP address of a host connected to the third network device and the device ID of the third network device;
generate the first forwarding table entry based on the first interface, the first IP address and the device ID of the third network device.

Optionally, the second network device includes a second interface and is connected with the first network device through the second interface; the machine-executable instructions also cause the processor to:
before receiving the first packet sent by the second network device, send a second packet to the second network device, wherein the second packet includes a device ID of the first network device, so that the second network device records a first correspondence between the second interface and the device ID of the first network device;
receive a third packet sent by the second network device, and record a second correspondence between the first interface and a device ID of the second network device, wherein the third packet includes the device ID of the second network device.

Optionally, the machine-executable instructions further cause the processor to:
modify a status flag bit of the first forwarding table entry to a first value, wherein the first value is used to indicate the invalid status.

Optionally, the machine-executable instructions further cause the processor to:
after receiving the first packet sent by the second network device, search for, if the status information indicates that the second network device and the third network device are accessible from each other, the first forwarding table entry with the outgoing interface being the first interface and the device ID being the device ID of the third network device;
set the status of the first forwarding table entry to a valid status.

Optionally, the first packet is a first link layer broadcast packet, and a payload of the first link layer broadcast packet includes a device ID of the second network device, the device ID of the third network device and the status information; or,
the first packet is a first IP multicast packet, and a payload of the first IP multicast packet includes the device ID of the second network device, the device ID of the third network device and the status information.

Optionally, the second packet is a second link layer broadcast packet, and a payload of the second link layer broadcast packet includes the device ID of the first network device; or, the second packet is a second IP multicast packet, and a payload of the second IP multicast packet includes the device ID of the first network device;
the third packet is a third link layer broadcast packet, and a payload of the third link layer broadcast packet includes the device ID of the second network device; or, the third packet is a third IP multicast packet, and a payload of the third IP multicast packet includes the device ID of the second network device.

Optionally, the route update packet includes an extended community attribute, and the extended community attribute includes the device ID of the third network device.

In a sixth aspect, an example of the present disclosure provides a second network device, wherein the second network device is connected with a third network device, and is connected with a first interface of a first network device, and the first network device includes multiple forwarding table entries, wherein the forwarding table entries each include a destination address, an outgoing interface and a device ID, and the device ID is an ID of a network device accessed by a host to which the destination address belongs; the second network device includes: a processor; a transceiver; and a machine-readable storage medium having stored therein machine-executable instructions that can be executed by the processor; wherein the machine-executable instructions cause the processor to:
acquire status information, wherein the status information is used to indicate whether the second network device and the third network device are accessible from each other ;
send a first packet to the first network device, wherein the first packet includes a device ID of the third network device and the status information, so that when the status information indicates that the second network device and the third network device are not accessible from each other, the first network device searches for a first forwarding table entry with the outgoing interface being the first interface and the device ID being the device ID of the third network device, and sets a status of the first forwarding table entry to an invalid status.

Optionally, the machine-executable instructions further cause the processor to:
before acquiring the status information, receive a route update packet sent by the third network device, wherein the route update packet includes a first IP address of a host connected to the third network device and the device ID of the third network device;
forward the route update packet to the first network device, so that the first network device generates the first forwarding table entry based on the first interface, the first IP address and the device ID of the third network device.

Optionally, the second network device includes a third interface and is connected with the third network device through the third interface, and the third network device includes a fourth interface and is connected with the second network device through the fourth interface; and wherein the machine executable instructions further cause the processor to:
before acquiring the status information, send a fourth packet to the third network device, wherein the fourth packet includes a device ID of the second network device, so that the third network device records a third correspondence between the fourth interface and the device ID of the second network device;
receive a fifth packet sent by the third network device, and record a fourth correspondence between the third interface and the device ID of the third network device, wherein the fifth packet includes the device ID of the third network device.

Optionally, the machine-executable instructions further cause the processor to:
before sending the first packet to the first network device, acquire the device ID of the third network device corresponding to the third interface from the fourth correspondence.

Optionally, there are multiple links between the second network device and the third network device; the machine-executable instructions further cause the processor to:
if the multiple links all fail, determine that the status information indicates that the second network device and the third network device are not accessible from each other; or, if any one of the multiple links does not fail, determine that the status information indicates that the second network device and the third network device are accessible from each other .

Optionally, the first packet is a first link layer broadcast packet, and a payload of the first link layer broadcast packet includes a device ID of the second network device, the device ID of the third network device and the status information; or,
the first packet is a first IP multicast packet, and a payload of the first IP multicast packet includes the device ID of the second network device, the device ID of the third network device and the status information.

Optionally, the fourth packet is a fourth link layer broadcast packet, and a payload of the fourth link layer broadcast packet includes a device ID of the second network device; or, the fourth packet is a fourth IP multicast packet, and a payload of the fourth IP multicast packet includes the device ID of the second network device;
the fifth packet is a fifth link layer broadcast packet, and a payload of the fifth link layer broadcast packet includes the device ID of the third network device; or, the fifth packet is a fifth IP multicast packet, and a payload of the fifth IP multicast packet includes the device ID of the third network device.

Optionally, the route update packet includes an extended community attribute, and the extended community attribute includes the device ID of the third network device.

In a seventh aspect, an example of the present application provides a machine-readable storage medium having stored therein machine-executable instructions, which, when called and executed by a processor, cause the processor to carry out the method of in the first aspect or the second aspect.

In an eighth aspect, an example of the present application provides a computer program product, which causes a processor to carry out the method in the first aspect or the second aspect.

Beneficial effects of the examples of the present disclosure: with the method and the apparatus for processing link fault, the electronic device and the medium provided by the examples of the present disclosure, the forwarding chip of the first network device can determine whether the second network device and the third network device are accessible from each other through the first packet sent by the second network device, so as to timely sense the connection status between the second network device and the third network device. Moreover, when the second network device and the third network device are not accessible from each other, the forwarding chip of the first network device can also timely set the first forwarding table entry with the next-hop address being the source address of the first packet and the device ID being the device ID of the third network device to the invalid status, that is, disable the forwarding path including the link between the second network device and the third network device, so that other forwarding table entries can be selected subsequently to forward the packet to the host connected to the third network device. That is, in the examples of the present disclosure, when there is a link fault between two network devices, other network devices can be timely informed, and the network device can also directly set the status of the forwarding table entry related to the failed link to the invalid status through the forwarding chip, which does not involve the processing of the received packet by the control plane, thus the speed is higher, and the routing can be switched more timely, thereby improving the training efficiency of the AI traffic model.

### Brief Description of the Drawings

The accompanying drawings described herein are used to provide a further understanding of the present disclosure and constitute a part of the present disclosure. The illustrative examples of the present disclosure and descriptions thereof are used to explain the present disclosure and do not constitute an improper limitations on the present disclosure.
Fig. 1 is a network traffic comparison diagram provided by an example of the present application;
Fig. 2 is a schematic structure diagram of a communication system provided by an example of the present application;
Fig. 3 is a flowchart of a method for processing link fault provided by an example of the present application;
Fig. 4 is a schematic diagram of a format of an extended community attribute provided by an example of the present application;
Fig. 5 is an exemplary schematic diagram of a packet format of a first link layer broadcast packet provided by an example of the present application;
Fig. 6 is an exemplary schematic diagram of a packet format of a first IP multicast packet provided by an example of the present application;
Fig. 7 is a schematic diagram of a format of a payload included in a first packet provided by an example of the present application;
Fig. 8 is a schematic diagram of a format of a payload included in a topology discovery packet provided by an example of the present application;
Fig. 9 is a flowchart of another method for processing link fault provided by an example of the present application;
Fig. 10 is an exemplary schematic diagram of another communication system provided by an example of the present application;
Fig. 11 is a schematic structure diagram of an apparatus for processing link fault provided by an example of the present application;
Fig. 12 is a schematic structure diagram of another apparatus for processing link fault provided by an example of the present application;
Fig. 13 is a schematic structure diagram of a first network device provided by an example of the present application;
Fig. 14 is a schematic structure diagram of a second network device provided by an example of the present application.

### Detailed Description

In order to make the purpose, technical solution and advantages of the present disclosure more clear and more understandable, the present disclosure will be further described in detail with reference to the attached drawings and examples. Obviously, the described examples are only some and not all, of the examples of the present disclosure. All other examples acquired based on the examples in the present disclosure by ordinary skilled in the art fall into the scope of protection of the present disclosure.

According to the number of GPUs used in training, the training scale of neural network model can be divided into Single-Scale, Small-Scale, Medium-Scale, Large-Scale, Extra-Large-Scale and so on. Among them, Single-Scale means training the model by using a single GPU, Small-Scale means training the model by using at least 8 GPUs, Medium-Scale means training the model by using at least 100 GPUs, Large-Scale means training the model by using at least 1000 GPUs, and Extra-Large-Scale means training the model by using at least 10000 GPUs.

With the increasing scale of neural network model, a single GPU can no longer meet the demand for computing resources and storage resources when training neural network model. For example, the training scale of AI traffic model is generally Large-Scale or Extra-Large-Scale. Therefore, at present, the method of joint training of neural network model by multiple GPUs is usually adopted to accelerate the training of the model. For example, training data can be divided into multiple copies, and each copy of training data can be assigned to a different GPU, so that each GPU can process different training data using the AI traffic model, and then a loss value is calculated by combining the processing result of each GPU, and the network parameters of the AI traffic model are adjusted by using the loss value. For another example, different GPUs are used to process the data of different dimensions in each piece of training data respectively by using the AI traffic model, and then the loss value is calculated by combining the processing result of each GPU, and the network parameters of the AI traffic model are adjusted by using the loss value. This joint training method usually involves a large number of GPUs, thus requires frequent interaction among the GPUs.

The hosts to which GPUs belong can communicate with each other based on network devices. Routing switching is required when there is a link fault between the network devices. A brief description of a current routing switching process will be provided below in conjunction with Fig. 2. A communication system shown in Fig. 2 includes a host H1, a host H2, a network device R11, a network device R12, a network device R21 and a network device R22. When a link between the network device R11 and the network device R22 fails, the network device R11 senses the link fault with the network device R22 by means of Bidirectional Forwarding Detection (BFD) or Connectivity Fault Management (CFM). Then, the network device R11 switches its own stored routes by means of Equal-Cost Multi-Path Routing (ECMP) or Fast Reroute (FRR). Then, the network device R11 sends a notification message to the network device R21 by means of the Internet Gateway Protocol (IGP) LinkState propagation or the Border Gateway Protocol (BGP) route updates. After receiving the notification message, the network device R21 recalculates the route through the control plane, deletes a forwarding table entry related to the failed link in the forwarding chip, and determines an Equal-Cost route of the deleted forwarding table entry by means of BGP Programmable Interrupt Controller (PIC) or IGP route calculation convergence, so that the network device R21 subsequently sends a packet to the host H2 using a link from the network device R21 to the network device R12 and then to the network device R22.

The convergence time of BFD and CFM is several milliseconds to several seconds. The convergence time of ECMP and FRR is several milliseconds, and is affected by a fault detection time. The convergence time of IGP LinkState propagation and BGP route updates is several milliseconds to several seconds, and is affected by the scale of network devices and the number of communication routes in the communication system. The convergence time of BGP PIC and IGP route calculation convergence is several hundreds of milliseconds to several seconds, and is affected by a fault notification time and the scale of network devices in the communication system. The long time required for fault notification and route recalculation will lead to untimely fault convergence, which will affect the training efficiency of AI traffic model.

In order to switch routes more timely when a connection between network devices fails, an example of the present disclosure provides a method for processing link fault, which is applied to a first network device. The first network device includes a first interface and is connected with a second network device through the first interface, and the second network device is connected with a third network device. The first network device includes multiple forwarding table entries, wherein the forwarding table entries each include a destination address, an outgoing interface and a device ID. The first network device, the second network device and the third network device can all be devices with packet forwarding capability such as switches or routers. The example of the present disclosure can be applied to a spine-leaf network architecture.

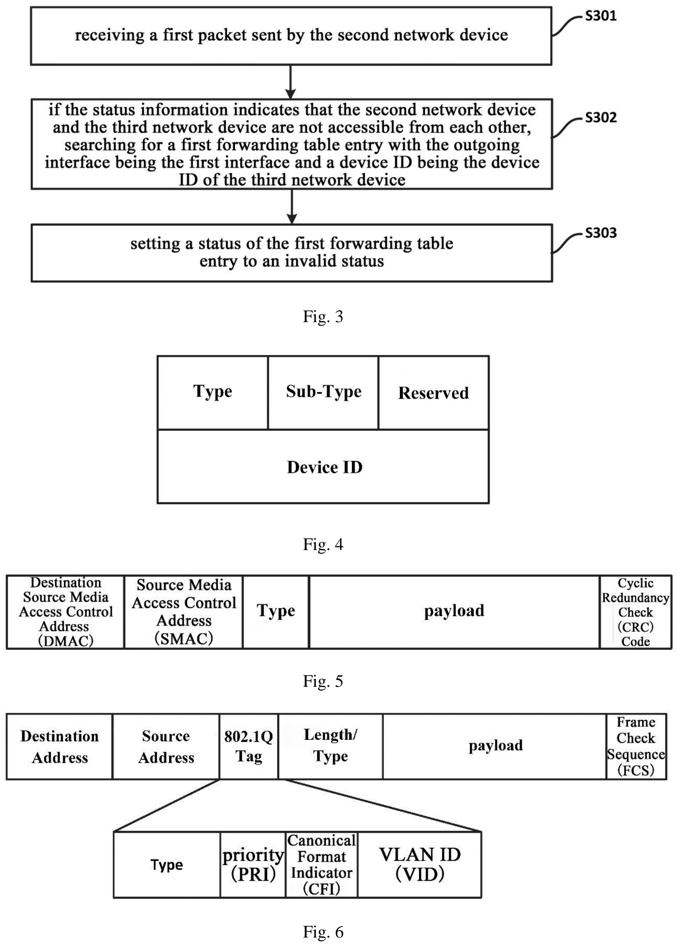

As shown in Fig. 3, the method for processing link fault provided by the example of the present disclosure includes the following blocks:
S301: receiving a first packet sent by the second network device.

The first packet includes a device identity document (ID) of the third network device and status information. The status information is used to indicate whether the second network device and the third network device are accessible from each other, that is, indicate whether a link between the second network device and the third network device fails.

Optionally, the first packet may also include a device ID of the second network device.

S302: if the status information indicates that the second network device and the third network device are not accessible from each other, searching for a first forwarding table entry with the outgoing interface being the first interface and a device ID being the device ID of the third network device.

The first network device includes the multiple forwarding table entries, and each of the forwarding table entries includes the destination address, the outgoing interface and the device ID, wherein the device ID is an ID of a network device accessed by a host to which the destination address belongs. Alternatively, the host can be a device with the ability to send and receive packets, such as a notebook computer, a desktop computer or a server, etc.

The forwarding table entry also includes a next hop address, for example, the next hop address of the first forwarding table entry is the Internet Protocol (IP) address of the second network device.

S303: setting a status of the first forwarding table entry to an invalid status.

Since a forwarding path represented by the first forwarding table entry needs to pass through a link between the second network device and the third network device needs to be passed, and the second network device and the third network device are not accessible from each other, that is, the link between the second network device and the third network device fails, the forwarding path is not available at present, thus the status of the first forwarding table entry can be set to the invalid status.

It can be understood that when the first network device forwards a service packet in the future, if it is determined that the destination address of the service packet is the same as the destination address of the first forwarding table entry, the first forwarding table entry will not be used for packet forwarding, and the other forwarding table entry matching the destination address of the service packet will be directly searched, and the service packet will be forwarded by using the searched forwarding table entry. This is equivalent to completing a routing switching of the first network device immediately after setting the status of the first forwarding table entry to the invalid status.

In the method for processing link fault provided by the example of the present disclosure, the forwarding chip of the first network device can determine whether the second network device and the third network device are accessible from each other through the first packet sent by the second network device, so as to timely sense the connection status between the second network device and the third network device. Moreover, when the second network device and the third network device are not accessible from each other, the forwarding chip of the first network device can also timely set the first forwarding table entry with the next-hop address being the source address of the first packet and the device ID being the device ID of the third network device to the invalid status, that is, disable the forwarding path including the link between the second network device and the third network device, so that other forwarding table entries can be selected subsequently to forward the packet to the host connected to the third network device. That is, in the examples of the present disclosure, when there is a link fault between two network devices, other network devices can be timely informed, and the network device can also directly set the status of the forwarding table entry related to the failed link to the invalid status through the forwarding chip, which does not involve the processing of the received packet by the control plane, thus the speed is higher, and the routing can be switched more timely, thereby improving the training efficiency of the AI traffic model.

In this example of the present disclosure, before the first network device receives the first packet sent by the second network device in S301, the first network device may also generate the first forwarding table entry, and the method for generating the first forwarding table entry includes the following operations:
Operation 1: the first network device receives, through the first interface, a route update packet forwarded by the second network device.

The route update packet includes a first Internet Protocol (IP) address of a host connected to the third network device and the device ID of the third network device.

As an example, the route update packet can specifically be a BGP route update packet. After learning the IP address of the host to which the third network device is connected, the third network device can send the BGP route update packet carrying the IP address. In this example of the present disclosure, the device ID of the third network device is newly added to the BGP route update packet, which is equivalent to that the BGP route update packet carries the device ID of an original network device that sent the BGP route update packet, so that other network devices can be informed of the original source device, from which the BGP route update packet originates, after receiving the BGP route update packet.

Operation 2: the first network device generates the first forwarding table entry based on the first interface, the first IP address and the device ID of the third network device.

The first forwarding table entry can be generated by using the first IP address as the destination address and using the first interface as the outgoing interface in combination with the device ID of the third network device. It can be understood that the first forwarding table entry also includes a next hop address which is an IP address of the second network device.

In the example of the present disclosure, the route update packet includes an extended community attribute, and the extended community attribute includes a device ID of the third network device.

The format of the extended community attribute is shown in Fig. 4. The extended community attribute includes: a Type, a Sub-Type, a Reserved bit (Res) and a Device ID.

With the above method, in the example of the present disclosure, the device ID of the third network device can be carried in the route update packet sent by the second network device to the first network device, so that the first network device can be informed of the device ID of the network device accessed by the host to which the first IP address included in the route update packet belongs, and record it in the forwarding table entry. That is, the network device can dynamically learn the device ID of the remote network device, so that when a link between the second network device and the third network device is subsequently determined to be failed, the first forwarding table entry corresponding to the failed link can be found more quickly, thus routing switching can be carried out more quickly, and the fault convergence efficiency is improved.

Moreover, the device ID of the third network device can be carried in the extended community attribute of the route update packet, without additionally adding a packet for carrying the device ID, which is easy to implement.

In the example of the present disclosure, the second network device includes a second interface and is connected with the first network device through the second interface. Before the first network device receives the first packet sent by the second network device in S301, the first network device may also send a second packet to the second network device. The second packet includes the device ID of the first network device, so that the second network device records a first correspondence between the second interface and the device ID of the first network device. Optionally, the first network device may send the second packet to the second network device when a connection between the first network device and the second network device is established.

Accordingly, the first network device can also receive a third packet sent by the second network device, wherein the third packet includes the device ID of the second network device. The first network device can then record a second correspondence between the first interface and the device ID of the second network device. Optionally, the second network device may send the third packet to the first network device when a connection between the second network device and the first network device is established. That is, the first network device may receive the third packet sent by the second network device when the connection between the first network device and the second network device is established.

When the connection between the first network device and the second network device is established, the first network device sets interface status of the first interface to up status, and sends the second packet to the second network device; and when the connection between the first network device and the second network device is established, the second network device sets interface status of the second interface to the up status and sends the third packet to the first network device.

With the above method, the first network device can be informed of the device ID of a network device connected with the first interface of the first network device, and the second network device can be informed of the device ID of a network device connected with the second interface of the second network device. That is, the network device can dynamically learn the device ID of the opposite-end network device, and maintain the logical topology relationship between network devices, so that subsequently, the second network device can carry the device ID of the first network device when notifying other network devices through a packet whether the second network device and the third network device are accessible from each other , thereby realizing fast notification of fault.

When a connection is established between the other two network devices, packets carrying device IDs of the network devices can also be sent between the two network devices and the correspondences can be recorded in the above method.

Alternatively, the device ID of the opposite-end network device connected to each interface of each network device can be configured in advance in the network device by means of static configuration.

Optionally, the third packet may also include a serial number, which is used to distinguish between the old and new packets, that is, every time the second network device sends the third packet to the first network device through the second interface, the serial number carried by the third packet is incremented by 1. On this basis, the above-described way in which the first network device records the second correspondence between the first interface and the device ID of the second network device can be realized by: recording the second correspondence among the first interface, the device ID of the second network device and the serial number.

In this example of the present disclosure, the first packet received by the first network device in S301 may be a first link layer broadcast packet, wherein a payload of the first link layer broadcast packet includes the device ID of the second network device, the device ID of the third network device and the status information.

Referring to Fig. 5, the first link layer broadcast packet includes a first Ethernet header (Eth), a payload and a Cyclic Redundancy Check (CRC) code. The first Eth includes Destination Source Media Access Control Address (DMAC), Source Media Access Control Address (SMAC) and Type, where the SMAC is the MAC of the network device sending the first link layer broadcast packet, and the DMAC is the preset multicast MAC. In the first link layer broadcast packet, the DMAC takes up 6 Bytes, the SMAC takes up 6 Bytes, the Type takes up 2 Bytes, the payload takes up 46~1500 Bytes, and the CRC code takes up 4Bytes. In the example of the present disclosure, a value of the Type field in the first Eth is improved, so that the first link layer broadcast packet is defined as a packet for fault notification by the value of the Type field. The value of the Type field can be set according to actual situations, which is not limited by the example of the present disclosure.

Alternatively, the first packet is a first IP multicast packet, and a payload of the first IP multicast packet includes the device ID of the second network device, the device ID of the third network device and the status information.

Referring to Fig. 6, the first IP multicast packet includes a second Eth, a payload and a Frame Check Sequence (FCS). The second Eth includes Destination Address, Source Address, 802.1Q Tag and Length/Type. The 802.1Q Tag includes: Type, Priority (PRI), Canonical Format Indicator (CFI) and VLAN ID (VID). The FCS can be obtained by CRC-32 algorithm. In the first IP multicast packet, the Destination Address takes up 6 Bytes; the Source Address takes up 6 Bytes; the 802.1Q Tag takes up 4Bytes in total, wherein the Type takes up 2Bytes, the PRI takes up 3 bits, the CFI takes up 1bit, and the VID takes up 12 bits; the Length/Type takes up 2 Bytes; the payload takes up 45~1500 Bytes; the FCS takes up 4 Bytes. In the example of the present disclosure, a value of the Type field in the second Eth is improved, so that the first IP multicast packet is defined as a packet for fault notification by the value of the Type field. The value of the Type field can be set according to actual situations, which is not limited by the example of the present disclosure.

Optionally, the payload of the first packet may also include a serial number, which is used to distinguish the old packets from the new packets.

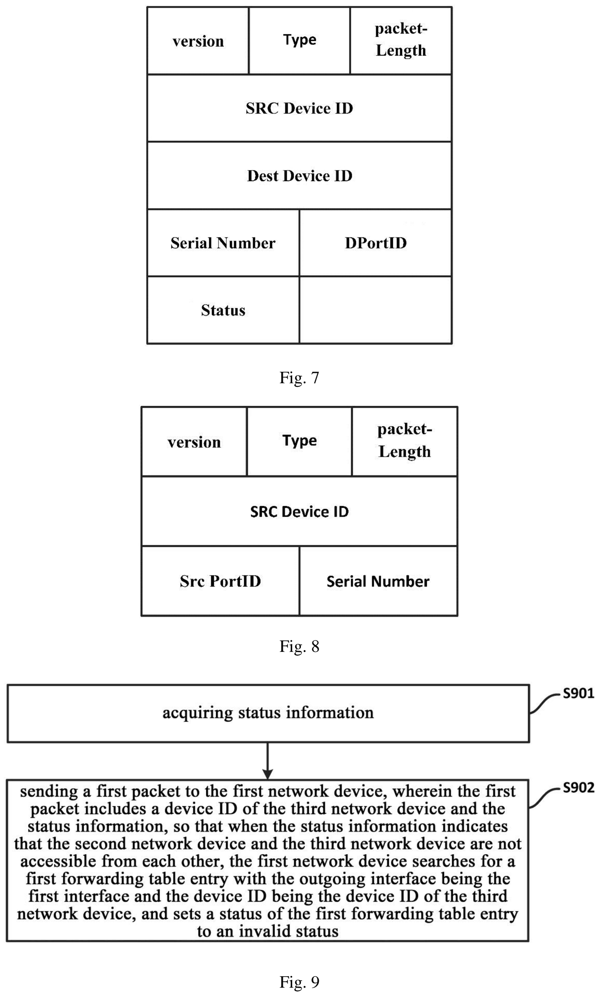

The packet format of the payload of the first packet is as shown in Fig. 7. The payload includes version, Type, packet-Length, Source Device ID (SRC Device ID), Destination Device ID (Dest Device ID), Serial Number, destination port ID (DPortID) and Status. The SRC Device ID is the device ID of the second network device, the Dest Device ID is the device ID of the third network device, and the DportID is an ID of a third interface ID of the second network device for connecting with the third network device, or an ID of a virtual interface which represents each interface in the second network device connected with the third network device. The Status indicates whether the second network device and the third network device are accessible from each other, and is specifically used to indicate the interface status of the interface indicated by DportID.

When there is one link between the second network device and the third network device, the second network device is connected to the third network device through the third interface, and at this time, the DportID is the ID of the third interface. When Status=0, it indicates that the interface status of the third interface is a failed status, that is, the link between the second network device and the third network device is failed; when Status=1, it indicates that the third interface is in a non-failed status, that is, the link between the second network device and the third network device does not fail.

When there are multiple links between the second network device and the third network device, the second network device is connected to the third network device through the multiple interfaces respectively, and each interface included in the second network device corresponds to one link. At this time, DportID is the ID of the virtual interface of the second network device. When Status=0, it indicates that the interface status of the virtual interface is a failed status, that is, the links between the second network device and the third network device all fail; When Status=1, it indicates that the virtual interface is in a non-failed status, that is, there is a non-failed link between the second network device and the third network device.

The first packet may be a packet generated by BGP or IGP.

In the example of the present disclosure, the second packet is a second link layer broadcast packet, wherein the payload of the second link layer broadcast packet includes the device ID of the first network device; alternatively, the second packet is a second IP multicast packet, wherein the payload of the second IP multicast packet includes the device ID of the first network device.

Similarly, the third packet is a third link layer broadcast packet, wherein the payload of the third link layer broadcast packet includes the device ID of the second network device; alternatively, the third packet is a third IP multicast packet, wherein the payload of the third IP multicast packet includes the device ID of the second network device.

Both the header of the second packet and the header of the third packet are the same as that of the first packet, please refer to the above description.

The formats of the payloads included in the second packet and the third packet are the same. As shown in Figure 8, the payload includes version, Type, packet-Length, SRC Device ID and Src PortID. Optionally, referring to Fig. 8, the payloads of the second packet and the third packet may also include Serial Number. The SRC Device ID is the device ID of the source network device itself sending the packet, and the Src PortID represents the ID of an interface used by the source network device when sending the packet.

In the example of the present disclosure, the first packet may be referred to as a quick notification packet, and the second packet and the third packet may be referred to as topology discovery packets. Both the quick notification packet and the topology discovery packet are newly added packets in the example of the present application, and the headers of the two packets may be the same. The network device can distinguish between these two packets by the Type included in the payload of the packets. For example, see Fig. 7, the payload of the quick notification packet includes Type=2, and see Fig. 8, the payload of the topology discovery packet includes Type= 1.

In the example of the present disclosure, the first network device includes at least one Equal-cost multi-path routing (ECMP) group. The ECMP group includes at least two forwarding table entries, and the destination addresses of all forwarding table entries included in the ECMP group are the same.

In the example of the present application, the way in which the first network device sets the status of the first forwarding table entry to the invalid status in S303 can be realized by: modifying a status flag bit of the first forwarding table entry to a first value. The first value is used to indicate the invalid status, for example, the first value is 0.

In the example of the present application, the first network device can directly manage the forwarding table entries through the forwarding chip, thus improving the speed of route switching.

In the example of the present disclosure, after the first network device receives the first packet sent by the second network device in S301, if the status information indicates that the second network device and the third network device are accessible from each other, the first network device can search for the first forwarding table entry with the outgoing interface being the first interface and the device ID being the device ID of the third network device, and set the status of the first forwarding table entry as valid status.

For the way in which the first network device search for the first forwarding table entry, please refer to the specific implementation in S302 above, and will not be repeated here.

The first network device can modify the status flag bit of the first forwarding table entry to a second value, wherein the second value is used to indicate the valid status, for example, the second value is 1.

With the above method, the network device can update the status of the forwarding table entry stored by itself in time according to the received first packet, so as to switch the routing in time.

Based on the same concept, an example of the present disclosure also provides a method for processing link fault, which is applied to a second network device, the second network device is connected with a third network device and is connected to a first interface of a first network device, and the first network device includes multiple forwarding table entries, wherein the forwarding table entries each include destination address, an outgoing interface and a device ID, and the device ID is an ID of a network device accessed by a host to which the destination address belongs. As shown in fig. 9, the method includes the following blocks:
S901. acquiring status information, wherein the status information is used to indicate whether the second network device and the third network device are accessible from each other.
S902. sending a first packet to the first network device, wherein the first packet includes a device ID of the third network device and the status information, so that when the status information indicates that the second network device and the third network device are not accessible from each other, the first network device searches for a first forwarding table entry with the outgoing interface being the first interface and the device ID being the device ID of the third network device, and sets a status of the first forwarding table entry to an invalid status.

It should be noted that the first network device is a network device with a link with the second network device being not failed, among network devices connected with the second network device. There may be one or more first network devices, and in the example of the present disclosure, it is assumed that there is one first network device as an example for illustration.

The second network device sends the first packet to the first network device by multicast or broadcast. Optionally, the second network device may send the first packet periodically. Alternatively, when the connection status of the link between the second network device and a network device connected to it changes, the second network device can send the first packet every preset duration for a preset number of times consecutively. For example, the preset duration is 10 milliseconds and the preset number of times is 10.

For the specific way in which the first network device searches for the first forwarding table entry and sets the status of the first forwarding table entry to the invalid status, please refer to the above description, and will not be repeated here.

In the method for processing link fault provided by the example of the present disclosure, the forwarding chip of the first network device can determine whether the second network device and the third network device are accessible from each other through the first packet sent by the second network device, so as to timely sense the connection status between the second network device and the third network device. Moreover, when the second network device and the third network device are not accessible from each other, the forwarding chip of the first network device can also timely set the first forwarding table entry with the next-hop address being the source address of the first packet and the device ID being the device ID of the third network device to the invalid status, that is, disable the forwarding path including the link between the second network device and the third network device, so that other forwarding table entries can be selected subsequently to forward the packet to the host connected to the third network device. That is, in the examples of the present disclosure, when there is a link fault between two network devices, other network devices can be timely informed, and the network device can also directly set the status of the forwarding table entry related to the failed link to the invalid status through the forwarding chip, which does not involve the processing of the received packet by the control plane, thus the speed is higher, and the routing can be switched more timely, thereby improving the training efficiency of the AI traffic model.

In the example of the present disclosure, before the second network device acquires the status information in S901, the second network device may also receive a route update packet sent by the third network device and forward the route update packet to the first network device, so that the first network device generates the first forwarding table entry based on the first interface, the first IP address and the device ID of the third network device. The route update packet includes the first IP address of a host connected to the third network device and the device ID of the third network device.

The route update packet includes an extended community attribute, and the extended community attribute includes the device ID of the third network device. For the format of the route update packet, please refer to the above description.

For the specific way in which the first network device generates the first forwarding table entry, please refer to the above description and will not be described here.

In the example of the present disclosure, the second network device includes a third interface and is connected with the third network device through the third interface, and the third network device includes a fourth interface and is connected with the second network device through the fourth interface. Before the second network device acquires the status information in S901, the second network device may send a fourth packet to the third network device, so that the third network device records a third correspondence between the fourth interface and the device ID of the second network device. The fourth packet includes the device ID of the second network device. Optionally, the second network device may send the fourth packet to the third network device when a connection between the second network device and the third network device is established.

Before the second network device acquires the status information in S901, the second network device may also receive a fifth packet sent by the third network device, and record a fourth correspondence between the third interface and the device ID of the third network device. The fifth packet includes the device ID of the third network device. Optionally, the third network device may send the fifth packet to the second network device when the connection between the third network device and the second network device is established; that is, the second network device can receive the fifth packet sent by the third network device when the connection between the second network device and the third network device is established.

The fourth packet and the fifth packet can be referred to as topology discovery packets, and for the format of topology packets, please refer to the above description.

In the example of the present disclosure, when there are multiple links between the second network device and the third network device, the way in which the second network device acquires the status information in S901 includes the following two cases:
Case 1: if the multiple links between the second network device and the third network device all fail, it is determined that the status information indicates that the second network device and the third network device are not accessible from each other.
Case 2: if any one of the multiple links between the second network device and the third network device does not fail, it is determined that the status information indicates that the second network device and the third network device are accessible from each other.

The second network device can detect whether each link fails by means of BFD or CFM, or can also detect whether each link fails by other means, which is not specifically limited in the examples of the present disclosure.

Before the second network device sends the first packet to the first network device in S902, the second network device may also acquire the device ID of the third network device corresponding to the third interface from the fourth correspondence.

In the example of the present disclosure, the first packet is a first link layer broadcast packet, and a payload of the first link layer broadcast packet includes the device ID of the second network device, the device ID of the third network device and the status information; or,
the first packet is a first IP multicast packet, and a payload of the first IP multicast packet includes the device ID of the second network device, the device ID of the third network device and the status information.

In the example of the present disclosure, the fourth packet is a fourth link layer broadcast packet, and a payload of the fourth link layer broadcast packet includes the device ID of the second network device; alternatively, the fourth packet is a fourth IP multicast packet, and a payload of the fourth IP multicast packet includes the device ID of the second network device.

The fifth packet is a fifth link layer broadcast packet, and a payload of the fifth link layer broadcast packet includes the device ID of the third network device; alternatively, the fifth packet is a fifth IP multicast packet, and a payload of the fifth IP multicast packet includes the device ID of the third network device.

The fourth packet and the fifth packet can both be referred to as topology discovery packets, and for the format of the topology packets, please refer to the above description.

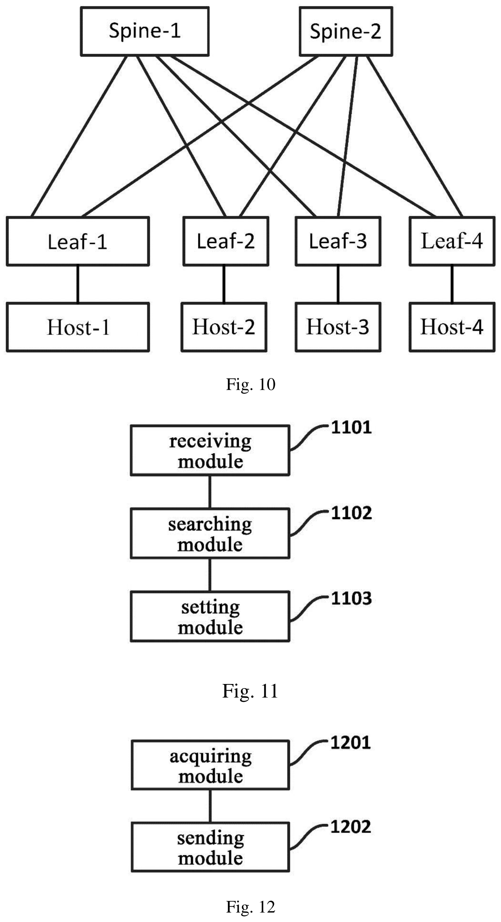

Referring to Fig. 10, a complete flow for processing link fault provided by the example of the present application is described below:
The communication system shown in Fig. 10 includes: Host-1, Host-2, Host-3, Host-4, Leaf -1, Leaf-2, Leaf-3, Leaf-4, Spine-1 and Spine-2. The device ID of Leaf-1 is 11, the device ID of Leaf-2 is 12, the device ID of Leaf-3 is 13, and the device ID of Leaf-4 is 14. The device ID of Spine-1 is 21 and the device ID of Spine -2 is 22. Leaf-1 connects to Host-1, Leaf-2 connects to Host-2, Leaf-3 connects to Host-3, and Leaf-4 connects to Host-4. Spine-1 and Spine-2 are connected with Leaf-1~Leaf-4 respectively, and the Spines communicate with the Leafs based on BGP protocol. Each Leaf connects to Spine-1 and Spine-2 through its own different interfaces, e.g. an interface in Leaf-1 that connects to Spine-1 is leaf-1-interface-1, and an interface in Leaf-1 that connects to Spine-2 is leaf-1-interface-2. Each Leaf stores forwarding table entries of other Hosts other than the host to which it is connected.

For example, the forwarding table entries stored in Leaf-1 are as follows:
Forwarding table entries included in ECMP 1 with the destination address being the address of Host-2:
Next hop 1 points to Spine-1, that is, the next hop address 1 is the address of Spine-1, the outgoing interface is leaf-1-interface-1, and the device ID is 12;
Next hop 2 points to Spine-2, the outgoing interface is leaf-1-interface-2, and the device ID is 12.

Forwarding table entries included in ECMP 2 with the destination address being the address of Host-3:
Next hop 1 points to Spine-1, the outgoing interface is leaf-1-interface-1, and the device ID is 13;
Next hop 2 points to Spine-2, the outgoing interface is leaf-1-interface-2, and the device ID is 13.

Forwarding table entries included in ECMP 3 with the destination address being the address of Host-4:
Next hop 1 points to Spine-1, the outgoing interface is leaf-1-interface-1, and the device ID is 14;
Next hop 2 points to Spine-2, the outgoing interface is leaf-1-interface-2, and the device ID is 14.

Assuming that the first network device is Leaf-1, the second network device is Spine-1 and the third network device is Leaf-4, that is, assuming that the link between Spine-1 and Leaf-4 fails, Spine-1 can send the first packet to Leaf-1, and the first packet includes: device ID 21, device ID 14 and Status=0.

After receiving the first packet, Leaf-1 searches for a forwarding table entry with the device ID being 14 and the outgoing interface being leaf-1-interface-1, that is, the first forwarding table entry included in ECMP 3, and sets the status of the forwarding table entry to the invalid status. When Leaf-1 needs to forward packets to Host-4 subsequently, the packets can be forwarded based on other forwarding table entries included in ECMP 3, i.e., "Next hop 2 points to Spine-2, the outgoing interface is leaf-1-interface-2, and the device ID is 14".

In this way, in the examples of the present disclosure, when the link between two network devices fails, that is, when the two network devices are not accessible from each other, other network devices can be quickly notified, so that other network devices can quickly search for the forwarding table entry corresponding to the failed link according to the outgoing interface ID and the device ID, thus enabling quick routing switching, improving the fault convergence efficiency, and thus improving the training efficiency of the AI traffic model.

Based on the same concept, an example of the present disclosure also provides an apparatus for processing link fault, which is applied to a forwarding chip of a first network device. The first network device includes a first interface and is connected with a second network device through the first interface, and the second network device is connected with a third network device. The first network device includes multiple forwarding table entries, and the forwarding table entries each include a destination address, an outgoing interface and a device ID, and the device ID is an ID of a network device accessed by a host to which the destination address belongs. As shown in Fig. 11, the apparatus includes a receiving module 1101, a searching module 1102 and a setting module 1103.

The receiving module 1101 is to receive a first packet sent by the second network device, wherein the first packet includes a device ID of the third network device and status information, and the status information is used to indicate whether the second network device and the third network device are accessible from each other.

The searching module 1102 is to search for, if the status information indicates that the second network device and the third network device are not accessible from each other, a first forwarding table entry with the interface being the first interface and the device ID being an device ID of the third network device.

The setting module 1103 is to set a status of the first forwarding table entry to an invalid status.

Optionally, the apparatus further includes:
the receiving module 1101 is further to receive, through the first interface, a route update packet forwarded by the second network device before receiving the first packet sent by the second network device, wherein the route update packet includes a first IP address of a host connected to the third network device and the device ID of the third network device;
a generating module, to generate the first forwarding table entry based on the first interface, the first IP address and the device ID of the third network device.

Optionally, the second network device includes a second interface and is connected with the first network device through the second interface; the apparatus further includes:
a sending module, to send a second packet to the second network device before the first packet sent by the second network device is received, wherein the second packet includes a device ID of the first network device, so that the second network device records a first correspondence between the second interface and the device ID of the first network device;
wherein the receiving module 1101 is further to receive a third packet sent by the second network device, wherein the third packet includes a device ID of the second network device, and a second correspondence between the first interface and the device ID of the second network device is recorded.

Optionally, the setting module 1103 is specifically to:
modify a status flag bit of the first forwarding table entry to a first value, wherein the first value is used to indicate the invalid status.

Optionally, the searching module 1102 is further to search for, if the status information indicates that the second network device and the third network device are accessible from each other, the first forwarding table entry with the outgoing interface being the first interface and the device ID being the device ID of the third network device, after the first packet sent by the second network device is received;
the setting module 1103 is further to set the status of the first forwarding table entry to a valid status.

Optionally, the first packet is a first link layer broadcast packet, and a payload of the first link layer broadcast packet includes the device ID of the second network device, the device ID of the third network device and the status information; alternatively, the first packet is a first IP multicast packet , and a payload of the first IP multicast packet includes the device ID of the second network device, the device ID of the third network device and the status information.

Optionally, the second packet is a second link layer broadcast packet, and a payload of the second link layer broadcast packet includes the device ID of the first network device; alternatively, the second packet is a second IP multicast packet, and a payload of the second IP multicast packet includes the device ID of the first network device;
the third packet is a third link layer broadcast packet, and a payload of the third link layer broadcast packet includes the device ID of the second network device; alternatively, the third packet is a third IP multicast packet, and a payload of the third IP multicast packet includes the device ID of the second network device.

Optionally, the route update packet includes an extended community attribute, and the extended community attribute includes a device ID of the third network device.

Based on the same concept, an example of the present disclosure also provides an apparatus for processing link fault, which is applied to a forwarding chip of a second network device, the second network device is connected with a third network device and is connected with a first interface of a first network device, and the first network device includes multiple forwarding table entries, wherein the forwarding table entries each include a destination address, an outgoing interface and a device ID, and the device ID is an ID of a network device accessed by a host to which the destination address belongs; As shown in Fig. 12, the apparatus includes an acquiring module 1201 and a sending module 1202.

The acquiring module 1201 is to acquire status information, wherein the status information is used to indicate whether the second network device and the third network device are accessible from each other;

The sending module 1202 is to send a first packet to the first network device, wherein the first packet includes a device ID of the third network device and the status information, so that when the status information indicates that the second network device and the third network device are not accessible from each other, the first network device searches for a first forwarding table entry with the outgoing interface is the first interface and the device ID is the device ID of the third network device, and sets a status of the first forwarding table entry to an invalid status.

Optionally, the apparatus further includes:
a receiving module, to receive a route update packet sent by the third network device before the status information is acquired, wherein the route update packet includes a first IP address of a host connected to the third network device and the device ID of the third network device;
wherein the sending module 1202 is further to forward the route update packet to the first network device, so that the first network device generates the first forwarding table entry based on the first interface, the first IP address and the device ID of the third network device.

Optionally, the second network device includes a third interface and is connected with the third network device through the third interface, and the third network device includes a fourth interface and is connected with the second network device through the fourth interface; the apparatus further includes:
the sending module 1202 is further to send a fourth packet to the third network device before the status information is acquired, wherein the fourth packet includes a device ID of the second network device, so that the third network device records a third correspondence between the fourth interface and the device ID of the second network device;
a receiving module, to receive a fifth packet sent by the third network device, wherein the fifth packet includes the device ID of the third network device, and a fourth correspondence between the third interface and the device ID of the third network device is recorded.

Optionally, the acquiring module 1201 is further to acquire the device ID of the third network device corresponding to the third interface from the fourth correspondence, before the first packet is sent to the first network device.

Optionally, there are multiple links between the second network device and the third network device; the acquiring module 1201 is specifically to:
if the multiple links all fail, determine that the status information indicates that the second network device and the third network device are not accessible from each other; or,
if any one of the multiple links does not fail, determine that the status information indicates that the second network device and the third network device are accessible from each other.

Optionally, the first packet is a first link layer broadcast packet, and a payload of the first link layer broadcast packet includes the device ID of the second network device, the device ID of the third network device and the status information; or,
the first packet is a first IP multicast packet, and a payload of the first IP multicast packet includes the device ID of the second network device, the device ID of the third network device and the status information.

Optionally, the fourth packet is a fourth link layer broadcast packet, and a payload of the fourth link layer broadcast packet includes the device ID of the second network device; or, the fourth packet is a fourth IP multicast packet, and a payload of the fourth IP multicast packet includes the device ID of the second network device;
the fifth packet is a fifth link layer broadcast packet, and a payload of the fifth link layer broadcast packet includes the device ID of the third network device; or, the fifth packet is a fifth IP multicast packet, and a payload of the fifth IP multicast packet includes the device ID of the third network device.

Optionally, the route update packet includes an extended community attribute, and the extended community attribute includes the device ID of the third network device.

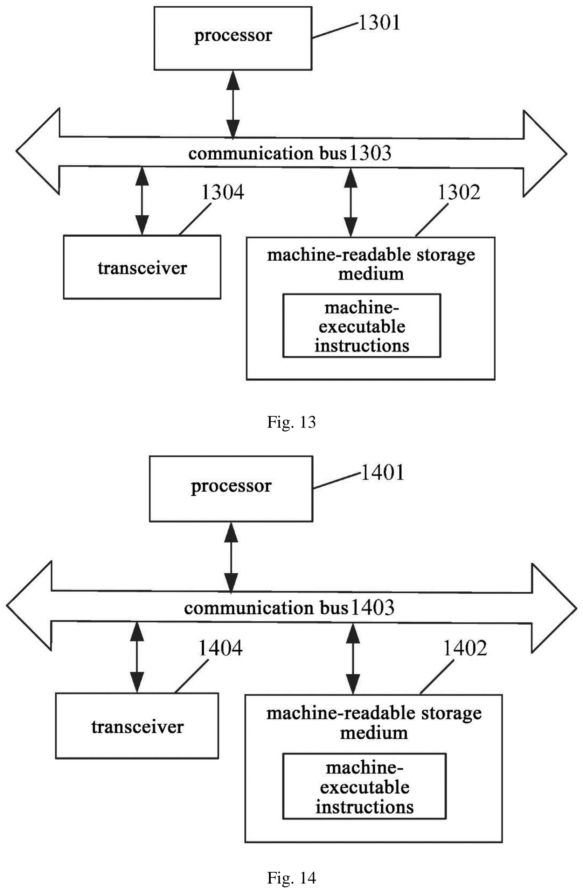

Based on the same concept, an example of the present disclosure provides a first network device, the first network device includes a first interface and is connected with a second network device through the first interface, and the second network device is connected with a third network device, and the first network device includes multiple forwarding table entries, wherein the forwarding table entries each a destination address, an outgoing interface and a device ID, and the device ID is an ID of a network device accessed by a host to which the destination address belongs. As shown in Fig. 13, the first network device includes a processor 1301; a transceiver 1304; a machine-readable storage medium 1302 having stored therein machine-executable instructions that can be executed by the processor 1301; the machine-executable instructions cause the processor 1301 to:
receive a first packet sent by the second network device, wherein the first packet includes a device ID of the third network device and status information, and the status information is used to indicate whether the second network device and the third network device are accessible from each other ;
if the status information indicates that the second network device and the third network device are not accessible from each other, search for a first forwarding table entry with the outgoing interface being the first interface and the device ID being an device ID of the third network device;
set a status of the first forwarding table entry to an invalid status.

Optionally, the machine-executable instructions further cause the processor 1301 to:
receive through the first interface, a route update packet forwarded by the second network device before receiving the first packet sent by the second network device, wherein the route update packet includes a first IP address of a host connected to the third network device and a device ID of the third network device;
generate the first forwarding table entry based on the first interface, the first IP address and the device ID of the third network device.

Optionally, the second network device includes a second interface and is connected with the first network device through the second interface; the machine-executable instructions further cause the processor 1301 to:
send a second packet to the second network device before receiving the first packet sent by the second network device, wherein the second packet includes a device ID of the first network device, so that the second network device records a first correspondence between the second interface and the device ID of the first network device;
receive a third packet sent by the second network device, wherein the third packet includes a device ID of the second network device, and record a second correspondence between the first interface and the device ID of the second network device.

Optionally, the machine-executable instructions further cause the processor 1301 to:
modify a status flag bit of the first forwarding table entry to a first value, wherein the first value is used to indicate the invalid status.

Optionally, the machine-executable instructions further cause the processor 1301 to:
after receiving the first packet sent by the second network device, search for the first forwarding table entry with the outgoing interface being the first interface and the device ID being the device ID of the third network device if the status information indicates that the second network device and the third network device are accessible from each other;
set the status of the first forwarding table entry to a valid status.

Optionally, the first packet is a first link layer broadcast packet, and a payload of the first link layer broadcast packet includes the device ID of the second network device, the device ID of the third network device and the status information; or,
the first packet is a first IP multicast packet, and a payload of the first IP multicast packet includes the device ID of the second network device, the device ID of the third network device and the status information.

Optionally, the second packet is a second link layer broadcast packet, and a payload of the second link layer broadcast packet includes the device ID of the first network device; or, the second packet is a second IP multicast packet, and a payload of the second IP multicast packet includes the device ID of the first network device;
the third packet is a third link layer broadcast packet, and a payload of the third link layer broadcast packet includes the device ID of the second network device; or, the third packet is a third IP multicast packet, and a payload of the third IP multicast packet includes the device ID of the second network device.

Optionally, the route update packet includes an extended community attribute, and the extended community attribute includes the device ID of the third network device.

In Fig. 13, a communication bus 1303 may also be included. The processor 1301, the machine-readable storage medium 1302 and the transceiver 1304 communicate with each other through the communication bus 1303, which can be a Peripheral Component Interconnect (PCI) bus or an Extended Industry Standard Architecture (EISA) bus, etc. The communication bus can be divided into address bus, data bus and control bus, etc. The transceiver 1304 can be a wireless communication module, and performs data interaction with other devices under the control of the processor 1301.

The machine-readable storage medium 1302 may include Random Access Memory (RAM) or Non-Volatile Memory (NVM), such as at least one disk memory. In addition, the machine-readable storage medium can also be at least one storage device located far away from the processor.

The processor 1301 may be a general-purpose processor, including a Central Processing Unit (CPU) and a Network Processor (NP), etc.; and can also be a Digital Signal Processing (DSP), an Application Specific Integrated Circuit (ASIC), a Field-Programmable Gate Array (FPGA) or other programmable logic devices, discrete gate or transistor logic devices, and discrete hardware components.

Based on the same concept, an example of the present disclosure provides a second network device, which is connected with a third network device and is connected to a first interface of a first network device, wherein the first network device includes multiple forwarding table entries, wherein the forwarding table entries each include a destination address, an outgoing interface and a device ID, and the device ID is an ID of a network device accessed by a host to which the destination address belongs. As shown in Fig. 14, the second network device includes: a processor 1401; a transceiver 1404; a machine-readable storage medium 1402 having stored therein machine-executable instructions that can be executed by the processor 1401; the machine-executable instructions cause the processor 1401 to:
acquire status information, wherein the status information is used to indicate whether the second network device and the third network device are accessible from each other;
send a first packet to the first network device, wherein the first packet includes a device ID of the third network device and the status information, so that when the status information indicates that the second network device and the third network device are not accessible from each other, the first network device searches for a first forwarding table entry with the outgoing interface being the first interface and the device ID being the device ID of the third network device, and sets a status of the first forwarding table entry to an invalid status.

Optionally, the machine-executable instructions further cause the processor 1401 to:
receive a route update packet sent by the third network device before acquiring the status information, wherein the route update packet includes a first IP address of a host connected to the third network device and the device ID of the third network device;
forward the route update packet to the first network device, so that the first network device generates the first forwarding table entry based on the first interface, the first IP address and the device ID of the third network device.

Optionally, the second network device includes a third interface and is connected with the third network device through the third interface, and the third network device includes a fourth interface and is connected with the second network device through the fourth interface; the machine-executable instructions further cause the processor 1401 to:
send a fourth packet to the third network device before acquiring the status information, wherein the fourth packet includes a device ID of the second network device, so that the third network device records a third correspondence between the fourth interface and the device ID of the second network device;
receive a fifth packet sent by the third network device, wherein the fifth packet includes a device ID of the third network device, and record a fourth correspondence between the third interface and the device ID of the third network device.

Optionally, the machine-executable instructions further cause the processor 1401 to acquire the device ID of the third network device corresponding to the third interface from the fourth correspondence before sending the first packet to the first network device.

Optionally, there are multiple links between the second network device and the third network device; the machine-executable instructions further cause the processor 1401 to:
if the multiple links all fail, determine that the status information indicates that the second network device and the third network device are not accessible from each other; or,
if any one of the multiple links does not fail, determine that the status information indicates that the second network device and the third network device are accessible from each other.

Optionally, the first packet is a first link layer broadcast packet, and a payload of the first link layer broadcast packet includes the device ID of the second network device, the device ID of the third network device and the status information; or,
the first packet is a first IP multicast packet, and a payload of the first IP multicast packet includes the device ID of the second network device, the device ID of the third network device and the status information.

Optionally, the fourth packet is a fourth link layer broadcast packet, and a payload of the fourth link layer broadcast packet includes the device ID of the second network device; or, the fourth packet is a fourth IP multicast packet, and a payload of the fourth IP multicast packet includes the device ID of the second network device;
the fifth packet is a fifth link layer broadcast packet, and a payload of the fifth link layer broadcast packet includes the device ID of the third network device; or, the fifth packet is a fifth IP multicast packet, and a payload of the fifth IP multicast packet includes the device ID of the third network device.

Optionally, the route update packet includes an extended community attribute, and the extended community attribute includes the device ID of the third network device.

In Fig. 14, a communication bus 1403 may also be included. The processor 1401, the machine-readable storage medium 1402 and the transceiver 1404 communicate with each other through the communication bus 1403, which can be a Peripheral Component Interconnect (PCI) bus or an Extended Industry Standard Architecture (EISA) bus, etc. The communication bus can be divided into an address bus, a data bus and a control bus, etc. The transceiver 1404 can be a wireless communication module, and performs data interaction with other devices under the control of the processor 1401.

The machine-readable storage medium 1402 may include a Random Access Memory (RAM) or a Non-Volatile Memory (NVM), such as at least one disk memory. In addition, the machine-readable storage medium can also be at least one storage device located far away from the aforementioned processor.

The processor 1401 may be a general-purpose processor, including a Central Processing Unit (CPU) and a Network Processor (NP), etc.; and can also be a Digital Signal Processing (DSP), an Application Specific Integrated Circuit (ASIC), a Field-Programmable Gate Array (FPGA) or other programmable logic devices, discrete gate or transistor logic devices, and discrete hardware components.

Based on the same concept, according to the methods for processing link fault provided by the above examples of the present disclosure, an example of the present disclosure also provides a machine-readable storage medium having stored therein machine-executable instructions that can be executed by the processor. The processor is caused by the machine executable instructions to carry out any of the above methods for processing link fault.

In yet another example provided by the present disclosure, a computer program product containing instructions is also provided, which, when running on a computer, causes the computer to execute any method for processing link fault in the above examples.

It should be noted that in the present disclosure, relational terms such as first and second are only used to distinguish one entity or operation from another entity or operation, and do not necessarily require or imply that there is any such actual relationship or order between these entities or operations. Moreover, the terms "including", "comprising" or any other variation thereof are intended to cover non-exclusive inclusion, so that a process, method, article or device including a series of elements includes not only those elements, but also other elements not explicitly listed or elements inherent to such process, method, article or device. Without further restrictions, an element defined by the phrase "including one..." does not exclude the existence of additional identical elements in the process, method, article or device including the mentioned elements.

The various examples in this specification are described in a related manner. Each example focuses on the differences from other examples, and the same and similar parts between the various examples can be referred to each other. Especially, for the apparatus examples, the description thereof is relatively simple because they are basically similar to the method examples, and the relevant points can be referred to the partial description of the method examples.

The above is only the preferred examples of the present disclosure, and is not intended to limit the present disclosure. Any modifications, equivalent replacements, improvements, etc. made within the spirit and principle of the present disclosure should be included within the scope of protection of the present disclosure.

## Claims

1. A method for processing link fault, which is applied to a forwarding chip of a first network device, wherein the first network device comprises a first interface and is connected with a second network device through the first interface, and the second network device is connected with a third network device, and the first network device comprises multiple forwarding table entries, wherein the forwarding table entries each comprise a destination address, an outgoing interface and a device ID, and the device ID is an ID of a network device accessed by a host to which the destination address belongs; the method comprises:
receiving a first packet sent by the second network device, wherein the first packet comprises a device ID of the third network device and status information, and the status information is used to indicate whether the second network device and the third network device are accessible from each other;
if the status information indicates that the second network device and the third network device are not accessible from each other, searching for a first forwarding table entry with the outgoing interface being the first interface and the device ID being the device ID of the third network device; and
setting a status of the first forwarding table entry to an invalid status.

2. The method according to claim 1, wherein before receiving the first packet sent by the second network device, the method further comprises:
receiving, through the first interface, a route update packet forwarded by the second network device, wherein the route update packet comprises a first IP address of a host connected to the third network device and the device ID of the third network device; and
generating the first forwarding table entry based on the first interface, the first IP address and the device ID of the third network device.

3. The method according to claim 1, wherein the second network device comprises a second interface and is connected with the first network device through the second interface; and wherein before receiving the first packet sent by the second network device, the method further comprises:
sending a second packet to the second network device, wherein the second packet comprises a device ID of the first network device, so that the second network device records a first correspondence between the second interface and the device ID of the first network device; and
receiving a third packet sent by the second network device, and recording a second correspondence between the first interface and a device ID of the second network device, wherein the third packet comprises the device ID of the second network device.

4. The method according to any one of claims 1-3, wherein setting the status of the first forwarding table entry to the invalid status comprises:
modifying a status flag bit of the first forwarding table entry to a first value, wherein the first value is used to indicate the invalid status.

5. The method according to claim 1, wherein after receiving the first packet sent by the second network device, the method further comprises:
if the status information indicates that the second network device and the third network device are accessible from each other, searching for the first forwarding table entry with the outgoing interface being the first interface and the device ID being the device ID of the third network device; and
setting the status of the first forwarding table entry to a valid status.

6. The method according to claim 1, wherein the first packet is a first link layer broadcast packet, and a payload of the first link layer broadcast packet comprises a device ID of the second network device, the device ID of the third network device and the status information; or,
the first packet is a first IP multicast packet, and a payload of the first IP multicast packet comprises the device ID of the second network device, the device ID of the third network device and the status information.

7. The method according to claim 3, wherein the second packet is a second link layer broadcast packet, and a payload of the second link layer broadcast packet comprises the device ID of the first network device; or, the second packet is a second IP multicast packet, and a payload of the second IP multicast packet comprises the device ID of the first network device;
the third packet is a third link layer broadcast packet, and a payload of the third link layer broadcast packet comprises the device ID of the second network device; or, the third packet is a third IP multicast packet, and a payload of the third IP multicast packet comprises the device ID of the second network device.

8. The method according to claim 2, wherein the route update packet comprises an extended community attribute, and the extended community attribute comprises the device ID of the third network device.

9. A method for processing link fault, which is applied to a forwarding chip of a second network device, wherein the second network device is connected with a third network device, and is connected with a first interface of a first network device, and the first network device comprises multiple forwarding table entries, wherein the forwarding table entries each comprise a destination address, an outgoing interface and a device ID, and the device ID is an ID of a network device accessed by a host to which the destination address belongs; the method comprises:
acquiring status information, wherein the status information is used to indicate whether the second network device and the third network device are accessible from each other; and
sending a first packet to the first network device, wherein the first packet comprises a device ID of the third network device and the status information, so that when the status information indicates that the second network device and the third network device are not accessible from each other, the first network device searches for a first forwarding table entry with the outgoing interface being the first interface and the device ID being the device ID of the third network device, and sets a status of the first forwarding table entry to an invalid status.

10. The method according to claim 9, wherein, before acquiring the status information, the method further comprises:
receiving a route update packet sent by the third network device, wherein the route update packet comprises a first IP address of a host connected to the third network device and the device ID of the third network device; and
forwarding the route update packet to the first network device, so that the first network device generates the first forwarding table entry based on the first interface, the first IP address and the device ID of the third network device.

11. The method according to claim 9, wherein the second network device comprises a third interface and is connected with the third network device through the third interface, and the third network device comprises a fourth interface and is connected with the second network device through the fourth interface; and wherein before acquiring the status information, the method further comprises:
sending a fourth packet to the third network device, wherein the fourth packet comprises a device ID of the second network device, so that the third network device records a third correspondence between the fourth interface and the device ID of the second network device; and
receiving a fifth packet sent by the third network device, and recording a fourth correspondence between the third interface and the device ID of the third network device, wherein the fifth packet comprises the device ID of the third network device.

12. The method according to claim 11, wherein before sending the first packet to the first network device, the method further comprises:
acquiring the device ID of the third network device corresponding to the third interface from the fourth correspondence.

13. The method according to claim 9, wherein there are multiple links between the second network device and the third network device; acquiring the status information comprises:
if the multiple links all fail, determining that the status information indicates that the second network device and the third network device are not accessible from each other; or,
if any one of the multiple links does not fail, determining that the status information indicates that the second network device and the third network device are accessible from each other .

14. The method according to claim 9, wherein the first packet is a first link layer broadcast packet, and a payload of the first link layer broadcast packet comprises a device ID of the second network device, the device ID of the third network device and the status information; or,
the first packet is a first IP multicast packet, and a payload of the first IP multicast packet comprises the device ID of the second network device, the device ID of the third network device and the status information.

15. The method according to claim 11, wherein the fourth packet is a fourth link layer broadcast packet, and a payload of the fourth link layer broadcast packet comprises the device ID of the second network device; or, the fourth packet is a fourth IP multicast packet, and a payload of the fourth IP multicast packet comprises the device ID of the second network device;
the fifth packet is a fifth link layer broadcast packet, and a payload of the fifth link layer broadcast packet comprises the device ID of the third network device; or, the fifth packet is a fifth IP multicast packet, and a payload of the fifth IP multicast packet comprises the device ID of the third network device.

16. The method according to claim 10, wherein the route update packet comprises an extended community attribute, and the extended community attribute comprises the device ID of the third network device.

17. An apparatus for processing link fault, which is applied to a forwarding chip of a first network device, wherein the first network device comprises a first interface and is connected with a second network device through the first interface, and the second network device is connected with a third network device, and the first network device comprises multiple forwarding table entries, wherein the forwarding table entries each comprise a destination address, an outgoing interface and a device ID, and the device ID is an ID of a network device accessed by a host to which the destination address belongs; the apparatus comprises:
a receiving module, to receive a first packet sent by the second network device, wherein the first packet comprises a device ID of the third network device and status information, and the status information is used to indicate whether the second network device and the third network device are accessible from each other;
a searching module, to search for, if the status information indicates that the second network device and the third network device are not accessible from each other, a first forwarding table entry with the outgoing interface being the first interface and the device ID being an device ID of the third network device; and
a setting module, to set a status of the first forwarding table entry to an invalid status.

18. The apparatus according to claim 17, wherein:
the receiving module is further to receive, through the first interface, a route update packet forwarded by the second network device before receiving the first packet sent by the second network device, wherein the route update packet comprises a first IP address of a host connected to the third network device and the device ID of the third network device;
wherein the apparatus further comprises a generating module, to generate the first forwarding table entry based on the first interface, the first IP address and the device ID of the third network device.

19. The apparatus according to claim 17, wherein the second network device comprises a second interface and is connected with the first network device through the second interface; and wherein the apparatus further comprises:
a sending module, to send a second packet to the second network device before the first packet sent by the second network device is received, wherein the second packet comprises a device ID of the first network device, so that the second network device records a first correspondence between the second interface and the device ID of the first network device;
wherein the receiving module is further to receive a third packet sent by the second network device, wherein the third packet comprises a device ID of the second network device, and a second correspondence between the first interface and the device ID of the second network device is recorded.

20. The apparatus according to any one of claims 17-19, wherein the setting module is specifically to:
modify a status flag bit of the first forwarding table entry to a first value, wherein the first value is used to indicate the invalid status.

21. The apparatus according to claim 17, wherein,
the searching module is further to search for, if the status information indicates that the second network device and the third network device are accessible from each other, the first forwarding table entry with the outgoing interface being the first interface and the device ID being the device ID of the third network device, after the first packet sent by the second network device is received;
the setting module is further to set the status of the first forwarding table entry to a valid status.

22. The apparatus according to claim 17, wherein the first packet is a first link layer broadcast packet, and a payload of the first link layer broadcast packet comprises a device ID of the second network device, the device ID of the third network device and the status information; or,
the first packet is a first IP multicast packet, and a payload of the first IP multicast packet comprises the device ID of the second network device, the device ID of the third network device and the status information.

23. The apparatus according to claim 19, wherein the second packet is a second link layer broadcast packet, and a payload of the second link layer broadcast packet comprises the device ID of the first network device; or, the second packet is a second IP multicast packet, and a payload of the second IP multicast packet comprises the device ID of the first network device;
the third packet is a third link layer broadcast packet, and a payload of the third link layer broadcast packet comprises the device ID of the second network device; or, the third packet is a third IP multicast packet, and a payload of the third IP multicast packet comprises the device ID of the second network device.

24. The apparatus according to claim 18, wherein the route update packet comprises an extended community attribute, and the extended community attribute comprises the device ID of the third network device.

25. An apparatus for processing link fault, which is applied to a forwarding chip of a second network device, wherein the second network device is connected with a third network device, and is connected with a first interface of a first network device, and the first network device comprises multiple forwarding table entries, wherein the forwarding table entries each comprise a destination address, an outgoing interface and a device ID, and the device ID is an ID of a network device accessed by a host to which the destination address belongs; the apparatus comprises:
an acquiring module, to acquire status information, wherein the status information is used to indicate whether the second network device and the third network device are accessible from each other; and
a sending module, to send a first packet to the first network device, wherein the first packet comprises a device ID of the third network device and the status information, so that when the status information indicates that the second network device and the third network device are not accessible from each other, the first network device searches for a first forwarding table entry with the outgoing interface being the first interface and the device ID being the device ID of the third network device, and sets a status of the first forwarding table entry to an invalid status.

26. The apparatus according to claim 25, wherein the apparatus further comprises:
a receiving module, to receive a route update packet sent by the third network device before the status information is acquired, wherein the route update packet comprises a first IP address of a host connected to the third network device and the device ID of the third network device;
wherein the sending module is further to forward the route update packet to the first network device, so that the first network device generates the first forwarding table entry based on the first interface, the first IP address and the device ID of the third network device.

27. The apparatus according to claim 25, wherein the second network device comprises a third interface and is connected with the third network device through the third interface, and the third network device comprises a fourth interface and is connected with the second network device through the fourth interface;
the sending module is further to send a fourth packet to the third network device before the status information is acquired, wherein the fourth packet comprises a device ID of the second network device, so that the third network device records a third correspondence between the fourth interface and the device ID of the second network device;
wherein the apparatus further comprises a receiving module, to receive a fifth packet sent by the third network device, wherein the fifth packet comprises the device ID of the third network device, and a fourth correspondence between the third interface and the device ID of the third network device is recorded.

28. The apparatus according to claim 27, wherein,
the acquiring module is further to acquire the device ID of the third network device corresponding to the third interface from the fourth correspondence, before the first packet is sent to the first network device.

29. The apparatus according to claim 25, wherein there are multiple links between the second network device and the third network device; the acquiring module is specifically to:
if the multiple links all fail, determine that the status information indicates that the second network device and the third network device are not accessible from each other; or,
if any one of the multiple links does not fail, determine that the status information indicates that the second network device and the third network device are accessible from each other .

30. The apparatus according to claim 25, wherein the first packet is a first link layer broadcast packet, and a payload of the first link layer broadcast packet comprises a device ID of the second network device, the device ID of the third network device and the status information; or,
the first packet is a first IP multicast packet, and a payload of the first IP multicast packet comprises the device ID of the second network device, the device ID of the third network device and the status information.

31. The apparatus according to claim 27, wherein the fourth packet is a fourth link layer broadcast packet, and a payload of the fourth link layer broadcast packet comprises the device ID of the second network device; or, the fourth packet is a fourth IP multicast packet, and a payload of the fourth IP multicast packet comprises the device ID of the second network device;
the fifth packet is a fifth link layer broadcast packet, and a payload of the fifth link layer broadcast packet comprises the device ID of the third network device; or, the fifth packet is a fifth IP multicast packet, and a payload of the fifth IP multicast packet comprises the device ID of the third network device.

32. The apparatus according to claim 26, wherein the route update packet comprises an extended community attribute, and the extended community attribute comprises the device ID of the third network device.

33. A first network device, wherein the first network device comprises a first interface and is connected with a second network device through the first interface, and the second network device is connected with a third network device, and the first network device comprises multiple forwarding table entries, wherein the forwarding table entries each comprise a destination address, an outgoing interface and a device ID, and the device ID is an ID of a network device accessed by a host to which the destination address belongs; the first network device comprises:
a processor;
a transceiver; and
a machine-readable storage medium having stored therein machine-executable instructions that can be executed by the processor; wherein the machine-executable instructions cause the processor to:
receive a first packet sent by the second network device, wherein the first packet comprises a device ID of the third network device and status information, and the status information is used to indicate whether the second network device and the third network device are accessible from each other ;
if the status information indicates that the second network device and the third network device are not accessible from each other, search for a first forwarding table entry with the outgoing interface being the first interface and the device ID being an device ID of the third network device;
set a status of the first forwarding table entry to an invalid status.

34. The first network device of claim 33, wherein the machine-executable instructions further cause the processor to:
before receiving the first packet sent by the second network device, receive, through the first interface, a route update packet forwarded by the second network device, wherein the route update packet comprises a first IP address of a host connected to the third network device and the device ID of the third network device;
generate the first forwarding table entry based on the first interface, the first IP address and the device ID of the third network device.

35. The first network device according to claim 33, wherein the second network device comprises a second interface and is connected with the first network device through the second interface; the machine-executable instructions also cause the processor to:
before receiving the first packet sent by the second network device, send a second packet to the second network device, wherein the second packet comprises a device ID of the first network device, so that the second network device records a first correspondence between the second interface and the device ID of the first network device;
receive a third packet sent by the second network device, and record a second correspondence between the first interface and a device ID of the second network device, wherein the third packet comprises the device ID of the second network device.

36. The first network device according to any one of claims 33-35, wherein the machine-executable instructions further cause the processor to:
modify a status flag bit of the first forwarding table entry to a first value, wherein the first value is used to indicate the invalid status.

37. The first network device of claim 33, wherein the machine-executable instructions further cause the processor to:
after receiving the first packet sent by the second network device, search for, if the status information indicates that the second network device and the third network device are accessible from each other, the first forwarding table entry with the outgoing interface being the first interface and the device ID being the device ID of the third network device;
set the status of the first forwarding table entry to a valid status.

38. The first network device according to claim 33, wherein the first packet is a first link layer broadcast packet, and a payload of the first link layer broadcast packet comprises a device ID of the second network device, the device ID of the third network device and the status information; or,
the first packet is a first IP multicast packet, and a payload of the first IP multicast packet comprises the device ID of the second network device, the device ID of the third network device and the status information.

39. The first network device according to claim 35, wherein the second packet is a second link layer broadcast packet, and a payload of the second link layer broadcast packet comprises the device ID of the first network device; or, the second packet is a second IP multicast packet, and a payload of the second IP multicast packet comprises the device ID of the first network device;
the third packet is a third link layer broadcast packet, and a payload of the third link layer broadcast packet comprises the device ID of the second network device; or, the third packet is a third IP multicast packet, and a payload of the third IP multicast packet comprises the device ID of the second network device.

40. The first network device according to claim 34, wherein the route update packet comprises an extended community attribute, and the extended community attribute comprises the device ID of the third network device.

41. A second network device, wherein the second network device is connected with a third network device, and is connected with a first interface of a first network device, and the first network device comprises multiple forwarding table entries, wherein the forwarding table entries each comprise a destination address, an outgoing interface and a device ID, and the device ID is an ID of a network device accessed by a host to which the destination address belongs; the second network device comprises:
a processor;
a transceiver; and
a machine-readable storage medium having stored therein machine-executable instructions that can be executed by the processor; wherein the machine-executable instructions cause the processor to:
acquire status information, wherein the status information is used to indicate whether the second network device and the third network device are accessible from each other;
send a first packet to the first network device, wherein the first packet comprises a device ID of the third network device and the status information, so that when the status information indicates that the second network device and the third network device are not accessible from each other, the first network device searches for a first forwarding table entry with the outgoing interface being the first interface and the device ID being the device ID of the third network device, and sets a status of the first forwarding table entry to an invalid status.

42. The second network device of claim 41, wherein the machine-executable instructions further cause the processor to:
before acquiring the status information, receive a route update packet sent by the third network device, wherein the route update packet comprises a first IP address of a host connected to the third network device and the device ID of the third network device;
forward the route update packet to the first network device, so that the first network device generates the first forwarding table entry based on the first interface, the first IP address and the device ID of the third network device.

43. The second network device according to claim 41, wherein the second network device comprises a third interface and is connected with the third network device through the third interface, and the third network device comprises a fourth interface and is connected with the second network device through the fourth interface; and wherein the machine executable instructions further cause the processor to:
before acquiring the status information, send a fourth packet to the third network device, wherein the fourth packet comprises a device ID of the second network device, so that the third network device records a third correspondence between the fourth interface and the device ID of the second network device;
receive a fifth packet sent by the third network device, and record a fourth correspondence between the third interface and the device ID of the third network device, wherein the fifth packet comprises the device ID of the third network device.

44. The second network device of claim 43, wherein the machine-executable instructions further cause the processor to:
before sending the first packet to the first network device, acquire the device ID of the third network device corresponding to the third interface from the fourth correspondence.

45. The second network device according to claim 41, wherein there are multiple links between the second network device and the third network device; the machine-executable instructions further cause the processor to:
if the multiple links all fail, determine that the status information indicates that the second network device and the third network device are not accessible from each other; or,
if any one of the multiple links does not fail, determine that the status information indicates that the second network device and the third network device are accessible from each other.

46. The second network device according to claim 41, wherein the first packet is a first link layer broadcast packet, and a payload of the first link layer broadcast packet comprises a device ID of the second network device, the device ID of the third network device and the status information; or,
the first packet is a first IP multicast packet, and a payload of the first IP multicast packet comprises the device ID of the second network device, the device ID of the third network device and the status information.

47. The second network device according to claim 43, wherein the fourth packet is a fourth link layer broadcast packet, and a payload of the fourth link layer broadcast packet comprises a device ID of the second network device; or, the fourth packet is a fourth IP multicast packet, and a payload of the fourth IP multicast packet comprises the device ID of the second network device;
the fifth packet is a fifth link layer broadcast packet, and a payload of the fifth link layer broadcast packet comprises the device ID of the third network device; or, the fifth packet is a fifth IP multicast packet, and a payload of the fifth IP multicast packet comprises the device ID of the third network device.

48. The second network device according to claim 42, wherein the route update packet comprises an extended community attribute, and the extended community attribute comprises the device ID of the third network device.

49. A machine-readable storage medium having stored therein machine-executable instructions which, when called and executed by a processor, cause the processor to carry out the method according to any one of claims 1 to 8 or claims 9 to 16.

50. A computer program product, which causes a processor to carry out the method according to any one of claims 1 to 8 or claims 9 to 16.
